# EUROPÄISCHE PATENTSCHRIFT

(11) **EP 0 496 190 B1**
(45) Veröffentlichungstag und Bekanntmachung des Hinweises auf die Patenterteilung: **05.04.1995**
(21) Anmeldenummer: 92100032.9
(22) Anmeldetag: 02.01.1992
(51) Int. Cl.: H04N 1/44, H04N 1/00

(54) **Verfahren zum Übertragen vertraulicher Faksimilenachrichten von und zu einem Personalcomputer**
Method of transmitting confidential facsimile messages from and to a personal computer
Procédé pour la transmission de messages confidentiels de fac-similé à partir de et vers un ordinateur personnel

(30) Priorität: 21.01.1991 DE 4101625
(43) Veröffentlichungstag der Anmeldung: 29.07.1992
(73) Patentinhaber: SIEMENS AKTIENGESELLSCHAFT, 80333 München (DE)
(72) Erfinder: Hirsch, Lucian, Dipl.-Ing., W-8000 München 90 (DE)

(56) Entgegenhaltungen:
- US-A- 4 941 170
- 1982 INTERNATIONAL ZÜRICH SEMINAR ON DIGITAL COMMUNICATIONS: MAN-MACHINEINTERACTION; PROCEEDINGS, 11. März 1982, ZÜRICH, CH, Seiten 93 - 100; W. HORAK:'EXPERIMENTAL TEXT AND FACSIMILE INTEGRATED WORKSTATION'

## Beschreibung

Die Erfindung betrifft ein Verfahren zum Übertragen von vertraulichen Faksimilenachrichten von und zu einem Personal-Computer, wobei jeweils einem Faksimilesendeempfänger über je eine Faksimile-PC-Schnittstelle ein oder mehrere Personalcomputer zugeordnet sind, wobei jedem Faksimilesendeempfänger und jedem Personalcomputer ein erster Speicher zur Aufnahme einer vollständigen Faksimilenachricht zugeordnet ist und wobei eine im ersten Speicher des jeweiligen Faksimilesendeempfängers gespeicherte Faksimilenachricht über die Schnittstelle nach einer Übertragungsaufforderung des Personalcomputers zu diesem übertragen wird.

Es ist allgemein bekannt, bei einem Netz aus Faksimilesendeempfängern den einzelnen Geräten eine Speichermöglichkeit zuzuordnen, die geeignet ist, eine vollständige Faksimilenachricht abzuspeichern. Auch ist es allgemein bekannt, einer Faksimilesendeempfangsstation einen oder mehrere Personalcomputer (PC) zuzuordnen, der zum Abrufen von Faksimilenachrichten aus einem vorgenannten Faksimilesendeempfänger und zum Speichern dieser Nachricht geeignet ist und der auch zum Eingeben von Faksimilenachrichten in den Faksimilesendeempfänger zwecks späterer Aussendung über das Faksimilenetz geeignet ist.

Aufgabe ist es, ein Verfahren zu finden, welches sicherstellt, daß von einem Faksimilesendeempfänger durch einen angeschlossenen PC nur eine Nachricht abgerufen werden kann, die auch für ihn bestimmt ist.

Dies wird dadurch erreicht, daß jedem Personalcomputer ein zweiter, eine eigene Kennung und Kennungen von Adressaten enthaltender Speicher zugeordnet ist, die er beim Absetzen einer Faksimilenachricht an den ortseigenen Faksimilesendeempfänger der Nachricht oder einer Übertragungsaufforderung zusetzt, daß im Faksimilesendeempfänger ein dritter, ankommende Kennungen abspeichernder Speicher vorgesehen ist und daß weiterhin im Faksimilesendeempfänger eine Vergleichseinrichtung vorgesehen ist, die eine im ersten Speicher des Faksimilesendeempfängers gespeicherte Faksimilenachricht nur dann an einen an ihn angeschlossenen Personalcomputer oder für einen fernen Personalcomputer über ein entsprechendes Steuerteil weitergibt, wenn dessen bei seiner Übertragungsaufforderung abgegebene Kennung mit der in der Faksimilenachricht enthaltenen Kennung des Adressaten übereinstimmt.

Hieraus ergibt sich der Vorteil, daß der sendende Teilnehmer den gewünschten Empfänger bestimmen kann und daß nur der gewünschte Adressat die Nachricht aus dem Speicher des ihm zugeordneten Faksimilesendeempfängers oder eines fernen Faksimilesendeempfängers entnehmen kann.

Das erfindungsgemäße Verfahren wird anhand einer Figur näher erläutert.

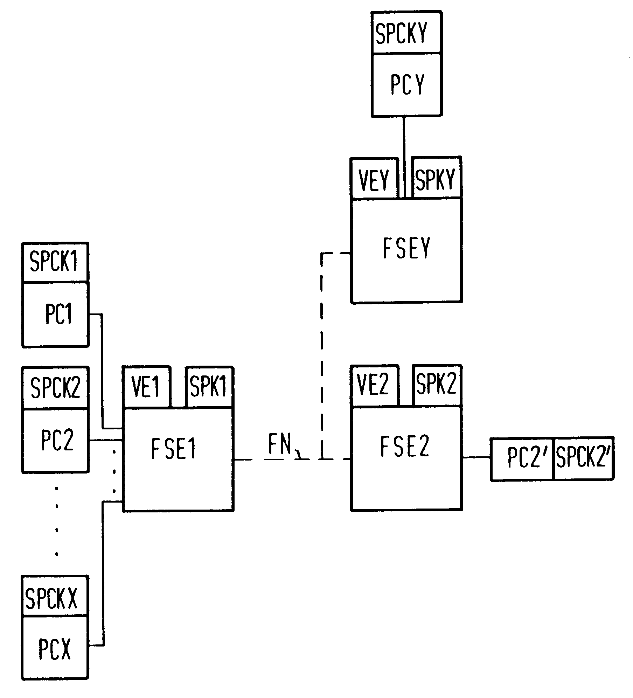

Die Figur zeigt angedeutet ein Faksimilenetz (Fernsprechnetz) FN mit den Faksimilesendeempfängern FSE1 bis FSEy und den Personalcomputern PC1 bis PCy. Außerdem sind den Faksimilesendeempfängern Vergleichereinrichtungen VE1 bis VEy und Speicher SPK1 bis SPKy für die Aufnahme von Kennungen der Sender ankommender Nachrichten zugeordnet. Den Personalcomputern sind Speicher SPCK1 bis SPCKy für eine eigene Kennung und Kennungen von Adressaten zugeordnet.

Es wird davon ausgegangen, daß z.B. über ein Fernsprechnetz ein Faksimilenetz realisiert ist. Als Faksimilegeräte sind Faksimilesendeempfänger vorgesehen (FSE1-FSEy), denen zumindest teilweise über eine PC-Fax-Kopplung ein oder mehrere Personalcomputer (PC's) zugeordnet sind. Jedes Faxgerät besitzt einen Speicher (erster Speicher), der so groß ist, daß er eine vollständige Faksimilenachricht speichern kann, die entweder über eine Fernverbindung ankommt oder die ihm von einem zugeordneten PC zwecks Aussendung zugeleitet wird. Alle PC's besitzen einen entsprechenden (ersten) Speicher, in den die vom Faksimilegerät abgerufenen Faksimilenachrichten zwecks Weiterverarbeitung oder in den zur Weitergabe zu erstellende Faksimilenachrichten abgespeichert werden.

Es soll nun sichergestellt werden, daß bestimmte Nachrichten, die an einem PC erstellt werden, z.B. nur einem bestimmten PC an einer fernen Faksimilestation zugänglich sind. Zu diesem Zweck besitzt jeder PC einen zweiten Speicher (SPCK1-SPCKy), in welchem eine nur ihm zugeordnete eigene Kennung (Passwort) und je eine Kennung für jeden PC abgespeichert ist, mit dem er eine vertrauliche Korrespondenzmöglichkeit haben soll.

Weiterhin ist jedem Faksimilegerät (FSE1-FSEy) ein dritter Speicher (SPK1-SPKy) zugeordnet, in dem die Kennung (Passwörter) abgespeichert wird, die einer eingespeicherten Faksimilenachricht zugeordnet ist und in den ebenfalls die Kennung eines einen Abruf der Nachricht veranlassenden PC's eingespeichert wird. Außerdem enthält jedes mit einem oder mehreren PC's bestücktes Faksimilegerät (FSE1-FSEy) eine Vergleichereinrichtung (VE1-VEy).

Wird beispielsweise von einem an das Faksimilegerät FSE1 angeschlossenen Personalcomputer PC1 eine Faksimilenachricht für den dem Faksimilegerät FSEy zugeordneten Personalcomputer PC erstellt, dann wird diese zur Weitersendung nach der Fertigstellung in den ersten Speicher des Faksimilegerätes FSE1 übertragen. Dabei wird an bestimmbarer Stelle aus dem zweiten Speicher SPCK1 sowohl die Kennung von PC1 als auch die Kennung des Adressaten PCy der Faksimilenachricht zugesetzt. Diese Kennungen können in einem dritten Speicher SPK1 des Faksimilegerätes FSE1 abgespeichert werden. Im vorliegenden Fall werden also die Kennungen von PC1 und PCy abgespeichert.

Erkennt das Faksimilegerät FSE1 eine über das Netz (FN) ankommende Übertragungsaufforderung, dann wird es zunächst mit einer entsprechenden Einrichtung überprüfen, ob dieser Aufforderung eine Kennung zugeordnet ist. Ist dies nicht der Fall, dann erfolgt bei unserem Beispiel keine Übertragung.

Ist eine Kennung vorhanden, dann wird diese mit der der Faksimilenachricht zugeordneten Adressatenkennung (hier von PCy) in einer Vergleichereinrichtung (VE1) verglichen und nur bei Übereinstimmung erfolgt eine Übertragung. Ähnlich ist es, wenn eine ankommende Faksimilenachricht bereits im ersten Speicher des Faksimilegerätes abgespeichert ist, wobei dem Faksimilegerät mehrere PC's zugeordnet sind.

Enthält die Faksimilenachricht eine Abdressatenkennung, dann wird nur die Übertragungsaufforderung des PC's bedient, dessen Übertragungsaufforderung die richtige Kennung automatisch zugesetzt ist.

Mit dem vorstehend geschilderten erfindungsgemäßen Verfahren kann daher in einfacher Weise eine vertrauliche Übertragung ermöglicht werden.

Das vorstehende Verfahren ist selbstverständlich nicht nur auf ein Faksimilenetz beschränkt, das nur Faksimilesendeempfänger besitzt. Es können auch reine Sendegeräte oder reine Empfangsgeräte verwendet werden. Im Sendegerät werden dann der dritte Speicher (SPK1-SPKy) und die Vergleichereinrichtung (VTE1-VTEy) nur zum Überprüfen von über das Netz ankommenden Übertragungsaufforderungen benötigt, während bei reinen Empfangsgeräten mit diesen Einrichtungen die Berechtigung der angeschlossenen PC's überprüft wird.

## Patentansprüche

1. Verfahren zum Übertragen von vertraulichen Faksimilenachrichten von und zu einem Personalcomputer, wobei jeweils einem Faksimilesendeempfänger über je eine Faksimile-PC-Schnittstelle ein oder mehrere Personalcomputer zugeordnet sind, wobei jedem Faksimilesendeempfänger und jedem Personalcomputer ein erster Speicher zur Aufnahme einer vollständigen Faksimilenachricht zugeordnet ist und wobei eine im ersten Speicher des jeweiligen Faksimilesendeempfängers gespeicherte Faksimilenachricht über die Schnittstelle nach einer Übertragungsaufforderung des Personalcomputers zu diesem übertragen wird,
**dadurch gekennzeichnet,** daß jedem Personalcomputer (PC1-PC4) ein zweiter, eine eigene Kennung und Kennungen von Adressaten enthaltender Speicher (SPCK1-SPCKy) zugeordnet ist, die er beim Absetzen einer Faksimilenachricht an den ortseigenen Faksimilesendeempfänger (FSE1-FSEy) der Nachricht oder einer Übertragungsaufforderung zusetzt, daß im Faksimilesendeempfänger (FSE1-FSEy) ein dritter, ankommende Kennungen abspeichernder Speicher (SPK1-SPKy) vorgesehen ist und daß weiterhin im Faksimilesendeempfänger (FSE1-FSEy) eine Vergleichseinrichtung (VE1-VEy) vorgesehen ist, die eine im ersten Speicher des Faksimilesendeempfängers (FSE1-FSEy) gespeicherte Faksimilenachricht nur dann an einen an ihn angeschlossenen Personalcomputer (PC1-PC4) oder für einen fernen Personalcomputer (PC1-PC4) über ein entsprechendes Steuerteil weitergibt, wenn dessen bei seiner Übertragungsaufforderung abgegebene Kennung mit der in der Faksimilenachricht enthaltenen Kennung des Adressaten übereinstimmt.

2. Verfahren nach Patentanspruch 1, **dadurch gekennzeichnet,** daß in einem Netz mit Faksimilesendeempfängern (FSE1-FSE2) den einzelnen Geräten eine Einrichtung zugeordnet ist, mit deren Hilfe jeder abgehenden Faksimilenachricht außer der eigenen Kennung eine Kennung des gewünschten Adressaten zugesetzt werden kann, die beim Empfänger eine Weitergabe der Nachricht oder eine Blockierung der Weitergabe der Nachricht mittels dessen Vergleichereinrichtung (VE1-VEy) bewirkt.

## Claims

1. Method for the transmission of confidential facsimile messages from and to a personal computer, one or more personal computers being assigned in each case to one facsimile transceiver via in each case one facsimile/PC interface, a first memory for accommodating a complete facsimile message being assigned to each facsimile transceiver and to each personal computer, and, after a transmission request from the personal computer, a facsimile message stored in the first memory of the respective facsimile transceiver being transmitted to the personal computer via the interface, characterized in that a second memory (SPCK1-SPCKy), containing its own identifier and identifiers of addressees, is assigned to each personal computer (PC1-PC4), the personal computer adding the identifiers to the message or to a transmission request during transmission of a facsimile message to the locally dedicated facsimile transceiver (FSE1-FSEy), in that there is provided in the facsimile transceiver (FSE1-FSEy) a third memory (SPK1-SPKy) which stores incoming identifiers, and in that there is furthermore provided in the facsimile transceiver (FSE1-FSEy) a comparator (VE1-VEy) which passes on a facsimile message stored in the first memory of the facsimile transceiver (FSE1-FSEy) to a personal computer (PC1-PC4) connected thereto or for a remote personal computer (PC1-PC4), via an appropriate control section, only when the identifier of the personal computer, emitted when the latter makes a transmission request, corresponds to the identifier, contained in the facsimile message, of the addressee.

2. Method according to Patent Claim 1, characterized in that, in a network having facsimile transceivers (FSE1-FSE2), a device is assigned to the individual apparatuses, with the aid of which device there can be added to each outgoing facsimile message, in addition to its own identifier, an identifier of the desired addressee which causes, at the receiver, the comparator (VE1-VEy) of the receiver to pass on the message or block the passing on of the message.

## Revendications

1. Procédé pour la transmission de messages confidentiels de fac-similés à partir et en direction d'un ordinateur personnel, selon lequel un ou plusieurs ordinateurs personnels sont associés respectivement à un émetteur/récepteur de fac-similé, par l'intermédiaire respectivement d'une interface fac-similé - ordinateur personnel, selon lequel une première mémoire servant à recevoir un message de fac-similé complet est associée à chaque émetteur/récepteur de fac-similé et à chaque ordinateur personnel, et selon lequel un message de fac-similé mémorisé dans la première mémoire de l'émetteur/récepteur de fac-similé respectif est transmis à l'ordinateur personnel par l'intermédiaire de l'interface, après une demande de transmission de l'ordinateur personnel,caractérisé par le fait qu'à chaque ordinateur personnel (PC1-PC4) est associée une seconde mémoire (SPCK1, SPCKy), qui comporte une caractérisation particulière et des caractérisations de destinataires, que l'ordinateur ajoute au message ou à une demande de transmission, lors de l'émission d'un message de fac-similé dans l'émetteur/récepteur de fac-similé présent sur place (FSE1-FSEy), que dans l'émetteur/récepteur de fac-similé (FSE1 - FSEy) est prévue une troisième mémoire (SPK1 - SPKy) qui mémorise des caractérisations arrivantes, et, qu'en outre, dans l'émetteur/récepteur de fac-similé (FSE1-FSEy), est prévu un dispositif comparateur (VE1-VEy), qui retransmet un message de fac-similé mémorisé dans la première mémoire de l'émetteur/récepteur de fac-similé (FSE1-FSEy), à un ordinateur personnel (PC1-PC4) qui lui est raccordé ou pour un ordinateur personnel éloigné (PC1-PC4), par l'intermédiaire d'une partie de commande correspondante, uniquement lorsque la caractérisation de cet ordinateur personnel, délivrée lors de sa demande de transmission, coïncide avec la caractérisation contenue dans le message de fac-similé du destinataire.

2. Procédé suivant la revendication 1, caractérisé par le fait que dans un réseau comportant des émetteurs/récepteurs de fac-similés (FSE1-FSE2), aux différents appareils est associé un dispositif, à l'aide duquel à chaque message de fac-similé de départ peut être ajoutée, en plus de la caractérisation propre, une caractérisation du destinataire désiré, qui, dans le récepteur, déclenche un transfert du message ou un blocage de la retransmission du message au moyen du dispositif comparateur (VE1-VEy) de ce récepteur.
